# EUROPÄISCHE PATENTSCHRIFT

(11) **EP 0 829 636 B1**
(45) Veröffentlichungstag und Bekanntmachung des Hinweises auf die Patenterteilung: **02.06.1999**
(21) Anmeldenummer: 97117973.4
(22) Anmeldetag: 06.12.1994
(51) Int. Cl.: F02F 3/26, F02B 23/08, F02F 1/42

(54) **Hubkolben-Brennkraftmaschine**
Internal combustion engine
Moteur à combustion interne

(30) Priorität: 08.12.1993 DE 4341885
(43) Veröffentlichungstag der Anmeldung: 18.03.1998
(62) Teilanmeldung aus: 95902131.2
(73) Patentinhaber: König, Kurt, 86946 Vilgertshofen-Issing (DE)
(72) Erfinder: König, Kurt, 86946 Vilgertshofen-Issing (DE)
(74) Vertreter: Eisenführ, Speiser & Partner

(56) Entgegenhaltungen:
- GB-A- 352 513
- US-A- 4 162 661
- US-A- 4 872 433

## Beschreibung

Die Erfindung betrifft eine Hubkolbenbrennkraftmaschine nach dem Oberbegriff des Anspruchs 1.

Die Forderungen an Hubkolben-Brennkraftmaschinen sind ein geringer Schadstoffausstoß und ein niedriger spezifischer Kraftstoffverbrauch, d.h. es soll wenig Kraftstoff verbrannt werden. Zur Erfüllung dieser Forderungen müssen folgende Bedingungen beachtet werden: Hohe Frischgasbeschleunigung, hohe Frischgasgeschwindigkeit, wirbelfreie Strömung, Staufläche am Kolbenboden, Leitelement für Frischgase, Brennraum im Zylinderkopf und im Kolbenboden, Konzentration der Frischgase im Zentrum des Brennraumes, hohe Verdichtung und schnelle Verbrennung.

In der deutschen Patentschrift 32 24 337 wird ein Kolben mit einem kugelförmigen Quetschspalt und einem Brennraum, teilweise im Kolbenboden, beschrieben. Die kugelförmige Ausbildung des Kolbenbodens soll beim Kompressionshub die Potentialströmung der Frischgase beschleunigen, wobei gleichzeitig eine Rotationsströmung gleichsinnig umlaufend in Richtung Zylinderachse, aber in Gegenrichtung, vorhanden ist. In OT wird die Potentialströmung durch die kugelförmige Quetschfläche in den Brennraum gedrückt. Dabei werden die Kraftstoffteilchen, die sich in der äußeren Randzone der Potentialströmung befinden, ebenfalls nach innen befördert. Es bildet sich im Brennraum am Rande der Rotationsströmung ein fettes Gemisch, das durch zwei Zündelektroden gezündet wird. Durch den strömungsgünstigen Kolbenboden befinden sich die Kraftstoffteilchen der Potentialströmung im Bereich der Zylinderwand und werden in OT durch den in den Quetschflächen entstehenden Druck in den oberen Teil des Brennraumes befördert. Die Rotationsströmung verhindert ein Eindringen in das Zentrum des Brennraumes. Das erklärt auch die Anordnung von zwei Zündelektroden.

Für die britische Patentschrift 1 119 298 gilt dasselbe wie für die deutsche Patentschrift 32 24 337, da Brennraum, Kolbenboden und Quetschflächen die gleichen Merkmale aufweisen. In OT werden hier die Frischgase über Kanäle zur Zündelektrode gedrückt und gezündet. Die Flamme schlägt über die Kanäle zurück in den Brennraum und entzündet die restlichen Frischgase. Da die Kanäle als Drossel wirken, ist mit Druck- und Leistungseinbußen zu rechnen. Außerdem tritt für die Verbrennung der gesamten Frischgase eine Verzögerung ein, was zu einer Steigerung der schädlichen Kohlenwasserstoffe im Abgas führt.

Bei der deutschen Patentschrift 37 18 083 läßt der satteldachförmige Kolbenboden eine ununterbrochene Strömung der Frischgase nicht zu. An den gegenüberliegenden seitlichen Muldenabschnitten entstehen Wirbelströmungen, die in der zentralen Mulde schädliche Turbulenzen erzeugen. Diese Turbulenzen werden noch durch die Quetschströmung verstärkt.

Die amerikanische Patentschrift 5,390,634 beschreibt einen Brennraum, der sich im Zylinderkopf und im Kolbenboden befindet. Der Kolbenboden hat einen unregelmäßigen Aufsatz, der das Gemisch leiten und in Turbulenzen versetzen soll. Die Teilquetschflächen unterstützen die Wirbelbildung ebenso wie der unsymmetrische Brennraum im Kolbenboden.

Aus der deutschen Patentschrift 35 11 837 geht ein weiterer Brennraum hervor, bei dem der Kolben eine Abstufung besitzt, für die sich eine entsprechende Gegenkontur in dem Zylinderraum findet. Die durch die Abstufung des Kolbens und des Zylinderraums vorhandenen kreisringförmigen Flächen dienen als Begrenzungsflächen eines Frischluftraumes, der als Puffer vorgesehen ist. Ein sich zwischen der Kolbenumfangswand im Bereich der Abstufung und der entsprechenden Zylinderinnenwand während der Verdichtung bildender Ringspalt, der eine Verbindung von dem Frischluftraum zum Brennraum herstellt, ist als Drossel vorgesehen. Daher werden die zu verdichtenden Frischgase, wenn sie von dem Frischluftraum in den Brennraum gelangen, abgebremst.

Aus der deutschen Offenlegungsschrift 31 07 836 geht ein Kolben mit einer ringförmigen Mulde 12 zum Sammeln der Frischgase und zum Erzeugen einer Rotationsbewegung dieser Gase um die Ringachse hervor. Auch hier findet keine Beschleunigung der Frischgase statt.

Aus der Patentschrift der deutschen demokratischen Republik 91 636 geht eine Leitung der Frischgase in einer vorgegebenen Richtung durch Leitkanäle hervor, die vergleichbare mit Leitschaufeln von Turbinen sind.

Die Zusammenfassung der japanischen Patentanmeldung 07 019 051 zeigt, wie Frischgase zwischen einem Kolben sowie einem Zylinderkopf nach innen gedrückt und durch ein Leitelement in den Verdichtungsraum geführt werden, der sich im Zylinderkopf befindet.

Schließlich geht aus der Zusammenfassung der japanischen Patentanmeldung 61-175 225 ein Brennraum hervor, dessen Mittenachse versetzt zu der Brennraumachse im Kolbenboden angeordnet ist. Mit anderen Worten: die Teilbrennräume sind zueinander versetzt angeordnet. Durch die Versetzung und den Quetschspalt werden die Frischgase im Verdichtungsraum verwirbelt. Ein Gemischleitelement ist nicht vorhanden. Darüber hinaus werden die Frischgase nicht kreisförmig geführt.

Es ist Aufgabe der Erfindung, die eingangs erwähnten Bedingungen zu erfüllen und einen Brennraum zu schaffen, der bei Kraftstoffeinsparung eine geringere Schadstoffemission im Verhältnis zu dem Kraftstoffverbrauch aufweist.

Die vorstehende Aufgabe wird durch die Merkmale des Anspruchs 1 gelöst. Vorteilhafte Ausgestaltungen finden sich u.a. in den Unteranspüchen 2 und 3.

Im Saughub strömen die Frischgase durch ein oder mehrere Einlaßventile tangential in den Brennraum ein. Durch die kreisende Bewegung wird an der gekühlten Zylinderwand die Frischgastemperatur abgesenkt, wodurch eine bessere Füllung erreicht wird und eine höhere Verdichtung möglich ist, was höhere Leistung bedeutet bei Verringerung des spezifischen Kraftstoffverbrauchs.

Beim Kompressionshub wird die kreisende Bewegung der Frischgase durch ein Gemischleitelement am Kolbenboden beibehalten, wobei eine kreisförmige Quetschfläche, die hier als Staufläche dient, für die notwendige Aufwärtsbewegung sorgt. Durch den Quetschspalt in OT werden die Frischgase kreisend nach innen gedrückt, sammeln sich im Zentrum der Brennraummulde und werden von einer in der Zylinderlängsachse angeordneten Zündelektrode gezündet. Durch die zentrale Anordnung der Zündelektrode kann sich die Flammenfront nach allen Seiten gleichmäßig und schnell ausbreiten, was eine Verringerung des HC-Anteils im Abgas mit sich bringt.

Beim Verbrennen von Dieselöl kann anstelle der Zündelektrode in der Zylinderlängsachse eine Einspritzdüse vorgesehen werden. Da das Einspritzen des Dieselöls hauptsächlich in die Brennraummulde im Kolbenboden erfolgt, wobei sich der Kraftstoff als dünner Film an der Wand der Mulde niederschlägt, ist die Verbrennung weicher und die Lärmemission geringer.

Beim Betreiben als Magermotor sind mindestens zwei Einlaßkanäle mit je einem Einspritzventil vorzusehen, wobei beim Saughub ein mageres Gemisch in den Zylinder strömt und von UT bis Einlaß ein fettes Gemisch einströmt. Die Einspritzventile sind hintereinander geschaltet. Beim Verdichten wird durch die Frischgasführung und den Quetschspalt das fette Gemisch kreisend in der Brennraummulde des Kolbenbodens konzentriert und gezündet.

Anhand nachstehender Zeichnungen wird Gestaltung und Ausführung des Brennraumes erläutert. Es zeigt:
- Figur 1: einen schematischen Längsschnitt durch einen Zylinder einer Brennkraftmaschine mit einem erfindungsgemäßen Brennraum und mit Darstellung der einströmenden Frischgase;
- Figuren 2a, 2b: schematische Teillängsschnitte durch den Brennraum gemäß Figur 1;
- Figur 3: ein Steuerdiagramm für die Brennkraftmaschine; und
- Figur 4: ein Arbeitsschema für einen Fünf-Zylinder-Zweitakt-Reihenmotor.

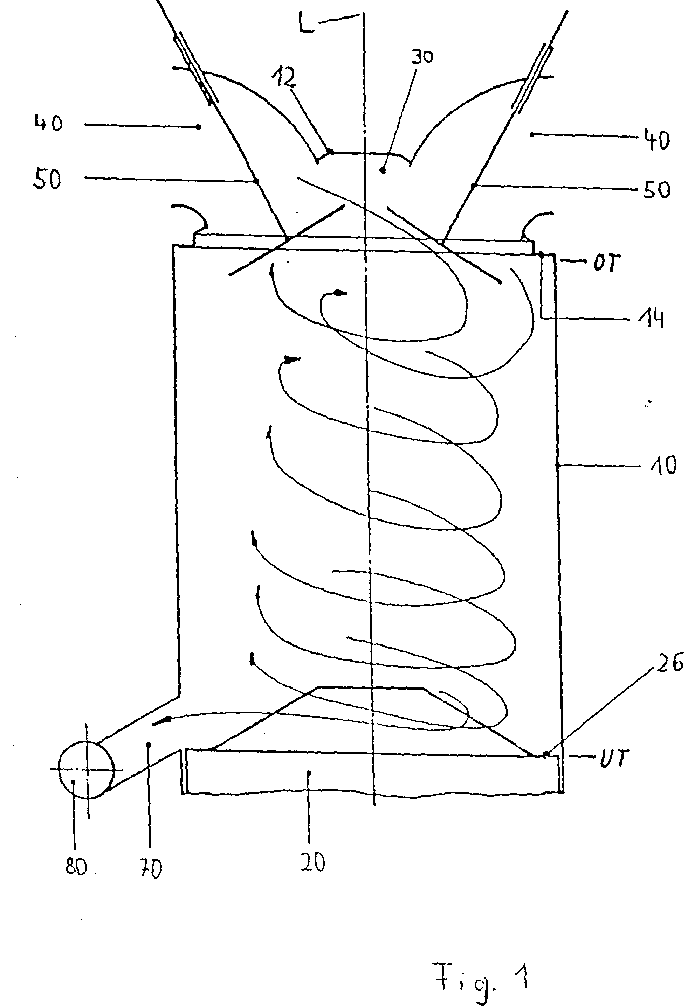

In Figur 1 ist mit 10 ein Zylinder und mit 20 ein Kolben einer Zweitaktbrennkraftmaschine bezeichnet, welcher sich von einem unteren Totpunkt (= UT) zu einem oberen Totpunkt (= OT) hin- und herbewegen kann. In den kegelstumpfartig ausgebildeten Brennraum 30 des Zylinderkopfes 12 münden beidseits einer Längsachse L des Zylinders 10 zwei Einlaßkanäle 40. Die Einlaßkanäle 40 sind hierbei so angeordnet, daß das aus ihnen austretende frische Gemisch entlang der Zylinderwand kreisend in den Zylinder 10 eintreten kann, wie dies in Figur 1 durch entsprechende Pfeile dargestellt ist. Die beiden Einlaßkanäle 40 lassen sich mittels Einlaßventilen 50 freigeben bzw. verschließen. Die beiden Einlaßventile 50 sind dabei so ausgebildet, daß sie beim Öffnen des jeweiligen Einlaßkanals 40 in den Brennraum 30 hineinragen, wie dies in Figur 1 dargestellt ist. Die beiden Ventile 50 können in ihre Schließstellung mittels einer nicht weiter dargestellten Feder vorbelastet sein.

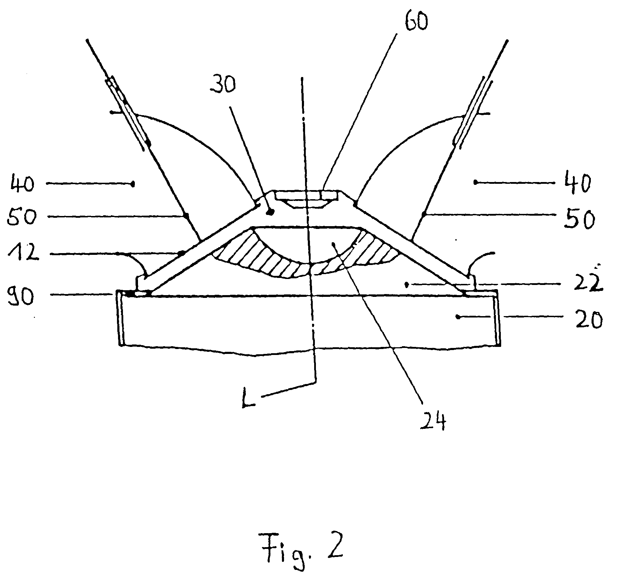

Wie aus Figur 2a hervorgeht, kann im Zentrum des kegelstumpfartigen Brennraumes 30 eine Zündkerze 60 in der Weise angeordnet sein, daß sie in der Längsachse L des Zylinders 10 sitzt. Alternativ kann anstelle der Zündkerze 60 eine Einspritzdüse 60', insbesondere ein Mehrlochdüse, vorgesehen sein, wie dies aus Figur 2b hervorgeht.

Bezogen auf Figur 1, ist unterhalb der Einlaßkanäle 40 der Auslaßkanal 70 vorgesehen, der über ein steuerbares Regelelement, wie beispielsweise ein Ventil 80 freigebbar und verschließbar ist. Wie aus Figur 1 hervorgeht, ist das Auslaßventil 80 mit einem gewissen Abstand zum Mündungsbereich des Auslaßkanals 70 in den Zylinder 10 angeordnet. Hierdurch läßt sich eine thermische Überbelastung des Auslaßventils 80 vermeiden. Wie ebenfalls aus Figur 1 hervorgeht, ist der Auslaßkanal 70 zu den beiden Einlaßkanälen 40 in der Weise angeordnet, daß die Spülung des Zylinders 10 im Wege des Gleichstromspülens erfolgt. Sowohl das Auslaßventil 80 als auch die beiden Einlaßventile 50 sind jeweils in Abhängigkeit eines Betriebsparameters der Brennkraftmaschine steuerbar.

Wie aus den Figuren 2a, 2b hervorgeht, ist der Kolben 20 mit einem ein Gemisch-bzw. Frischluftleitelement bildenden kegelstumpfartigen Aufsatz 22 versehen, dessen Form im wesentlichen der kegelstumpfartigen Form des Brennraums 30 angepaßt ist. Im Zentrum des kegelstumpfartigen Aufsatzes 22 ist eine vorzugsweise kalottenartige Vertiefung 24 vorgesehen, in die das zu zündende Gemisch bzw. die Frischluft gegenüber der Zündkerze 60 bzw. der Einspritzdüse 60' sammelbar ist. Weiterhin ist, wie dies ebenfalls aus den Figuren 2a, 2b hervorgeht, zwischen einer ringförmigen Fläche 26 des Kolbens 20 und der dem Kolben 20 bei Erreichen am oberen Totpunkt gegenüberliegende Zylinderkopffläche 14 ein Quetschspalt 90 ausgebildet, der das an dieser Stelle während des Verdichtungsvorgangs angesammelte Gemisch bzw. die Frischluft, verdrängt und durch den kegelstumpfartigen Aufsatz 22 des Kolbens 20 in Richtung zur Zündkerze 60 bzw. Einspritzdüse 60' beschleunigt.

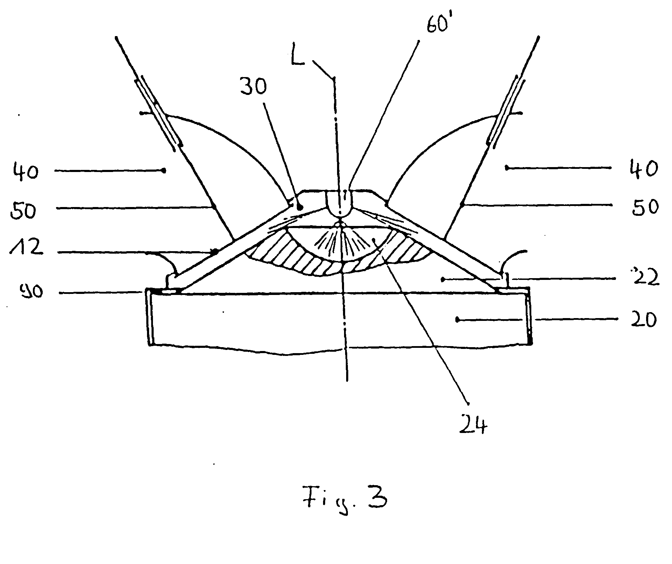

Da die beiden Einlaßkanäle 40 und der Auslaßkanal 70 über steuerbare Regelelemente 50, 80 in Abhängigkeit eines Betriebsparameters der Brennkraftmaschine gesteuert werden, kann ein unsymmetrisches Steuerdiagramm erzielt werden, wie dies aus Figur 3 hervorgeht.

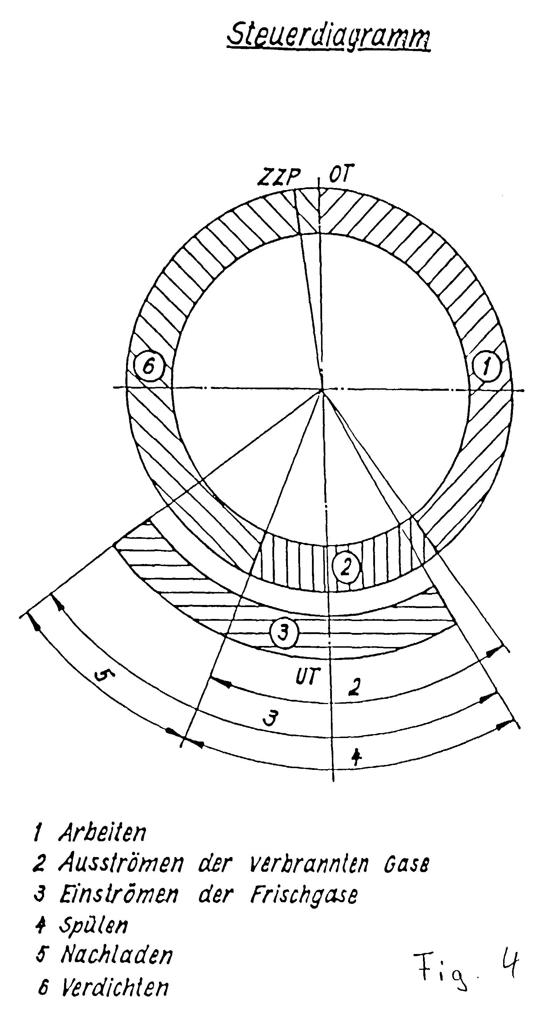

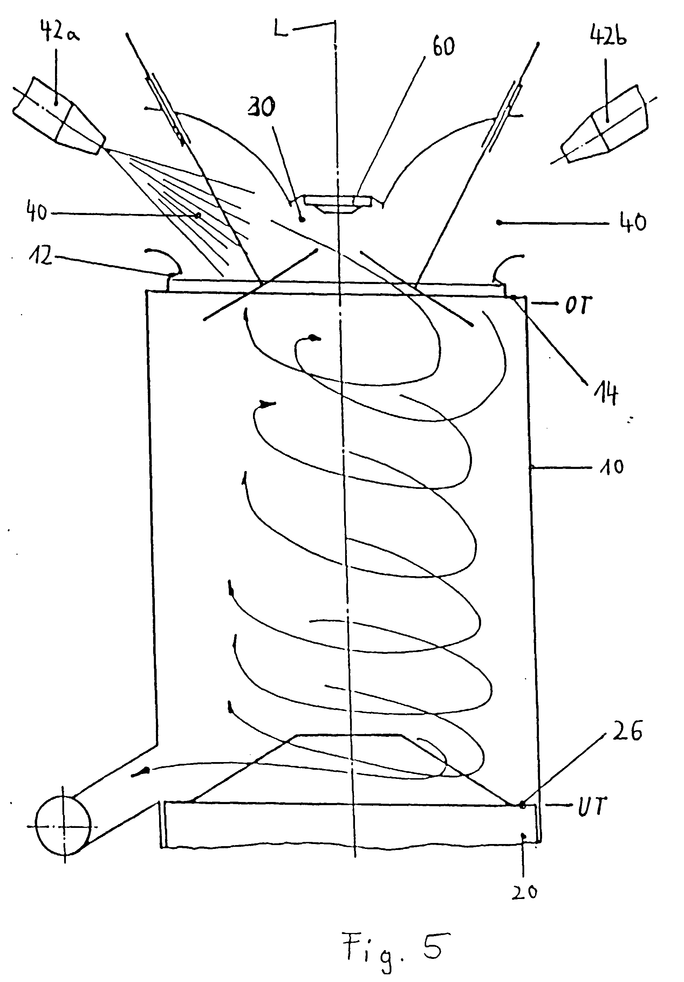

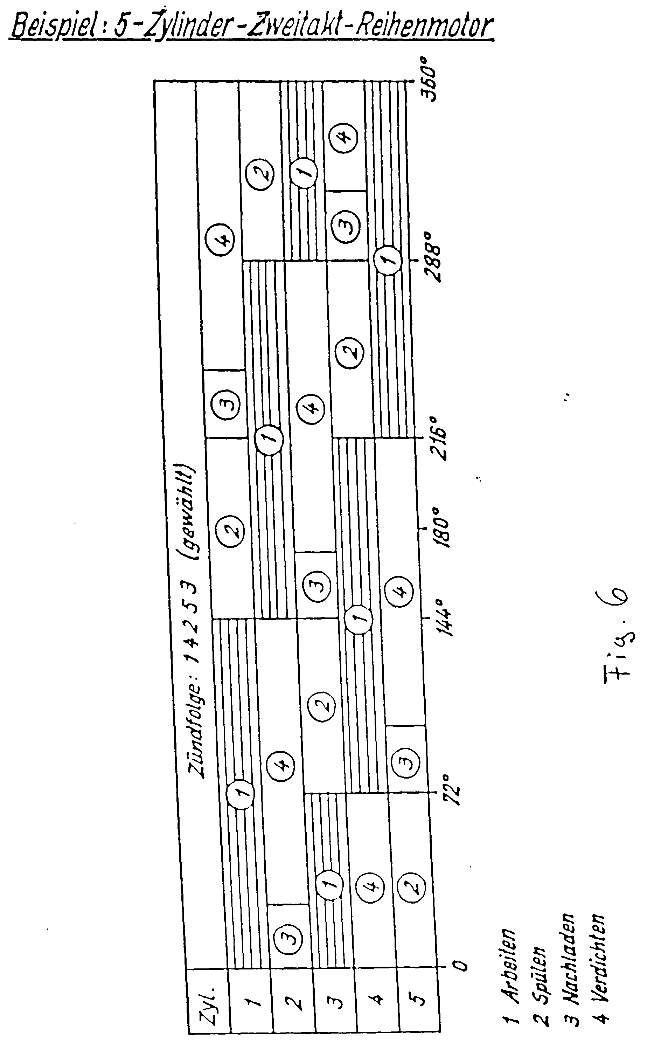

Wie aus der Figur 4 hervorgeht, kann das frische Gemisch auch mittels eines Einspritzens von Kraftstoff in die durch die Einlaßkanäle 40 mittels eines nicht weiter dargestellten Gebläses zugeführte Frischluft gebildet werden. Hierzu ist in jedem der Einlaßkanäle 40 ein Einspritzventil 42a bzw. 42b angeordnet.

Anstelle von zwei Einlaßkanälen 40 mit je einem Einspritzventil 42a bzw. 42b kann auch ein einziger Einspritzeinlaßkanal 40 mit einem nicht dargestellten Stufeneinspritzventil vorgesehen werden. Ebenso besteht die Möglichkeit, in einem Einlaßkanal 40 zwei Einspritzventile 42a bzw. 42b vorzusehen.

Die Arbeitweise der Brennkraftmaschine wird nachstehend erläutert:

Im ersten Takt arbeitet der Kolben 20, d.h., er bewegt sich vom oberen Totpunkt zum unteren Totpunkt. Vor Erreichen des unteren Totpunktes wird der Auslaßkanal 70 zum einen durch den Kolben 20 aber auch durch das steuerbare Regelelement 80 geöffnet. Kurz danach werden die Einlaßkanäle 40 durch die beiden Ventile 50 geöffnet. Das von einem Gebläse angetriebene frische Gemisch bzw. die frische Luft kann über die Einlaßkanäle 40 in den Brennraum 30 gelangen, wobei das frische Gemisch bzw. die Frischluft kreisend entlang der Zylinderwand des Zylinders 10 strömt. Im zweiten Takt bewegt sich der Kolben 20 vom unteren Totpunkt zum oberen Totpunkt. Hierbei wird der Auslaßkanal 70 sowohl durch das Ventilelement 80 als auch durch den Kolben 20 geschlossen. Anschließend werden die Einlaßkanäle 40 ebenfalls durch die Ventile 50 geschlossen und das frische Gemisch bzw. die frische Luft verdichtet. Kurz vor dem oberen Totpunkt wird das frische Gemisch mittels der Zündkerze 60 entzündet bzw. bei einem Betrieb der Zweitaktbrennkraftmaschine als Diesel verbrennende Brennkraftmaschine Kraftstoff eingespritzt. Zu bemerken ist, daß der Auslaßkanal 70 unabhängig von der Stellung des Kolbens 20 mittels des steuerbaren Regelelements 80 freigegeben bzw. geschlossen werden kann, d.h., daß der Auslaßkanal 70 bereits geschlossen bzw. freigegeben wird, bevor der Kolben 20 eine entsprechende Stellung im Zylinder 10 eingenommen hat.

Mit der Zweitakt-Brennkraftmaschine läßt sich auch eine sogenannte Ladungsschichtung bzw. Schichtladung vornehmen. Hierbei erfolgt die Zuführung des frischen Gemisches durch die zwei Einspritzventile 42a, 42b in den beiden Einlaßkanälen 40. Bewegt sich der Kolben 20 vom oberen Totpunkt zum unteren Totpunkt, so wird der Frischluft von dem ersten Einspritzventil 42a wenig Kraftstoff beigegeben, so daß ein mageres Gemisch entsteht. Im Nachladebereich, d.h., wenn sich der Kolben 20 vom unteren Totpunkt zum oberen Totpunkt bewegt, wird durch das zweite Einspritzventil 42b der einströmenden Luft viel Kraftstoff zugemischt, so daß ein fettes Gemisch entsteht. Durch den besonders gestalteten Kolben 20 sammelt sich das fette Gemisch in der kalottenartig gestalteten Vertiefung 24 des Kolbens 20, wo es von der zentral angeordneten Zündkerze gezündet wird.

Anstelle von zwei Einspritzventilen 42a, 42b bei je einem Einlaßkanal 40 kann auch ein Stufeneinspritzventil verwendet werden.

Desgleichen können bei einem einzigen Einlaßkanal zwei Einspritzventile vorgesehen werden.

Schließlich ist noch darauf hinzuweisen, daß der Antrieb der Steuerelemente bzw. Ventile für den Einlaß- und Auslaßkanal elektro-hydraulisch verstellt werden kann, womit die Steuerzeiten der jeweiligen Anforderung angepaßt werden.

## Patentansprüche

1. Hubkolben-Brennkraftmaschine, mit einem Zylinder (10) und einem darin sich hin- und herbewegenden Kolben (20) sowie mit wenigstens einem Einlaßkanal (40) und mit mindestens einem Auslaßkanal, wobei der Zylinderkopf (12) des Zylinders (10) und der Kolben (20) am Kolbenboden je eine ringförmige Quetschfläche (14, 26) zum Beschleunigen der Frischgase aufweisen, wobei am Kolbenboden sich ein Gemischleitelement (22) anschließt, das oben mit einer Vertiefung (24) versehen ist, und daß der Einlaßkanal (40) so angeordnet ist, daß die Frischgase kreisend in den Brennraum einströmen.

2. Hubkolben-Brennkraftmaschine nach Anspruch 1,
bei dem das Gemischleitelement ein kegelstumpfförmiger Aufsatz (22) ist.

3. Hubkolben-Brennkraftmaschine nach Anspruch 1 oder 2,
bei dem die Vertiefung (24) kalottenartig ausgebildet ist.

## Claims

1. A reciprocating-piston internal combustion engine having a cylinder (10) and a piston (20) which is reciprocatable therein and at least one inlet duct (40) and at least one exhaust duct (70), wherein the cylinder head (12) of the cylinder (10) and the piston (20) at the piston crown each have a respective annular squish surface (14, 26) for acceleration of the fresh gases, wherein adjoining the piston crown is a mixture guide element (22) which is provided at the top with a recess (24), and the inlet duct (40) is so arranged that the fresh gases flow with a circulatory movement into the combustion chamber.

2. A reciprocating-piston internal combustion engine as set forth in claim 1 wherein the mixture guide element is a frustoconical raised portion (22).

3. A reciprocating-piston internal combustion engine as set forth in claim 1 or claim 2 wherein the recess (24) is of a part-spherical configuration.

## Revendications

1. Moteur alternatif à combustion interne doté d'un cylindre (10), au sein duquel se déplace un piston (20) et équipé d'au moins un conduit d'admission (40) et d'au moins un conduit d'échappement, dont la culasse (12) du cylindre (10) et la tête du piston (20) recèlent chacune une surface compressible annulaire (14, 26) permettant d'accéler les gaz frais, dont la tête du piston est dotée d'un déflecteur du mélange air-carburant (22) présentant une cavité (24) sur sa face supérieure, et dans lequel le conduit d'admission (40) est agencé de telle façon que les gaz frais sont admis en courants rotatifs dans la chambre de combustion.

2. Moteur alternatif à combustion interne selon la revendication 1, dont le déflecteur du mélange air-carburant est un chapeau tronconique (22).

3. Moteur alternatif à combustion interne selon la revendication 1 ou 2, dans lequel la cavité (24) a la forme d'une calotte.
